# FASCICULE DE BREVET EUROPEEN

(11) **EP 2 386 689 B1**
(45) Date de publication et mention de la délivrance du brevet: **25.01.2017**
(21) Numéro de dépôt: 11153754.4
(22) Date de dépôt: 08.02.2011
(51) Int. Cl.: E01D 19/16, E01D 11/04

(54) **Procédé d'amortissement des vibrations de haubans et système associé**
Verfahren zur Schwingungsdämpfung von Schrägseilen, und entsprechendes System
Method for absorbing vibrations of stay cables and associated system

(30) Priorité: 12.05.2010 RU 2010119171
(43) Date de publication de la demande: 16.11.2011
(73) Titulaire: SOLETANCHE FREYSSINET, 92500 Rueil Malmaison (FR)
(72) Inventeur: Stubler, Jérôme, 75016 Paris (FR); Mellier, Erik, 78000 Versailles (FR)
(74) Mandataire: Cabinet Plasseraud

(56) Documents cités:
- DE-A1- 1 943 509
- DE-A1- 10 162 897
- FR-A1- 2 862 073

## Description

La présente invention se rapporte à l'amortissement des vibrations d'au moins deux haubans d'un ouvrage de construction.

A titre d'exemple non limitatif, l'amortissement proposé par l'invention peut notamment servir à amortir les vibrations d'une nappe de haubans d'un pont haubané. Dans les ponts haubanés, les haubans formant la nappe de haubans sont généralement ancrés à leur extrémité supérieure sur un pylône et à leur extrémité inférieure sur le tablier du pont. La nappe de haubans assure ainsi le maintien et la stabilité de la structure.

Néanmoins, dans certaines conditions, notamment lorsque le tablier du pont est soumis à des excitations périodiques, les haubans peuvent accumuler de l'énergie et osciller de manière importante. Les deux principales causes de ces vibrations sont le déplacement des ancrages des haubans par rapport au tablier sous l'effet de charges de trafic, et l'effet du vent agissant directement sur les haubans. Ces oscillations, lorsqu'elles ne sont pas maîtrisées, sont susceptibles d'endommager directement les haubans, tout en provoquant l'inquiétude des usagers se trouvant sur le tablier du pont.

Afin d'éviter ou de limiter les vibrations des haubans d'un ouvrage de construction, il est connu du document DE 1 943 509 A1, d'utiliser des câbles d'interconnexion qui permettent de relier entre eux une pluralité de haubans d'une même nappe de haubans, ces câbles d'interconnexion étant en outre directement ancrés sur le tablier du pont. Ces câbles d'interconnexion permettent de raidir l'ensemble de la nappe de haubans tout en permettant d'interdire certains modes de vibration, principalement plane, desdits haubans.

Néanmoins, lorsque des câbles d'interconnexion sont utilisés pour relier entre eux une pluralité de haubans, il convient de prendre en compte les paramètres suivants :
- la section, la rigidité et la tension des câbles d'interconnexion doivent être déterminées par un calcul d'ensemble de la nappe de haubans interconnectés ;
- la résistance des câbles d'interconnexion et de leurs ancrages doit être adaptée aux cas de charge extrême tel que le trafic routier sur le tablier du pont ou d'un vent turbulent sur l'ouvrage ou sur les haubans ;
- la prétension des câbles d'interconnexion doit permettre d'éviter toute détension sous charge extrême ; en effet, un câble d'interconnexion détendu ne joue plus son rôle et peut subir des chocs néfastes à la durabilité des ancrages, ce qui est également susceptible d'entraîner une rupture dudit câble d'interconnexion et donc son remplacement par un autre câble d'interconnexion présentant une section et une rigidité plus élevée tout en étant tendue à une valeur de tension supérieure ;
- les cassures angulaires des extrémités des haubans au niveau des ancrages doivent également être évaluées, et éventuellement corrigées.

La prise en compte de ces différents paramètres complique donc de manière relativement importante la mise en place de ces câbles d'interconnexion afin de raidir la nappe de haubans d'un ouvrage de construction.

Par ailleurs, lorsque ces câbles d'interconnexion doivent être installés après la mise en service de l'ouvrage de construction, pour corriger par exemple des problèmes de stabilité, il est impératif comme décrit ci-dessus de prétendre l'ensemble des câbles d'interconnexion ce qui modifie donc la géométrie des différents haubans de la nappe de haubans, avec des conséquences sur la structure de l'ouvrage et notamment l'apparition de cassures angulaires au niveau des extrémités des haubans directement ancrés sur le pylône et sur le tablier du pont dans le cas de ponts haubanés.

Une autre solution, selon le document FR 2 862 073 A1, consiste à utiliser des amortisseurs disposés entre les haubans et la structure de l'ouvrage ou bien directement interposés entre des haubans, de façon à dissiper une partie de l'énergie vibratoire des haubans.

Par souci d'efficacité notamment, ces amortisseurs sont traditionnellement des amortisseurs symétriques, c'est-à-dire qu'ils fonctionnement sensiblement de la même façon lorsqu'ils sont soumis à un effort de traction ou à un effort de compression. Il s'agit typiquement d'amortisseurs à piston à course rectiligne qui satisfont une relation symétrique et croissante entre l'effort développé et la vitesse de déplacement du piston, lorsqu'ils travaillent en traction (allongement) ou en compression (raccourcissement). La symétrie de la relation s'entend d'un comportement identique ou proche de ces amortisseurs en traction et en compression.

Or, lors d'un fonctionnement en compression, l'effort de réaction du piston peut être source d'instabilité.

A titre d'exemple, considérons une nappe de haubans d'un pont haubané, où un amortisseur respectif relie chaque paire de haubans adjacents de la nappe, les amortisseurs étant placés dans le prolongement les uns des autres. Lorsque deux amortisseurs de part et d'autre d'un hauban sont comprimés, le hauban pris entre ces deux éléments risque d'être poussé hors du plan de la nappe.

Cette instabilité fait que les amortisseurs ne fonctionnent plus.

La présente invention permet de limiter certains au moins des inconvénients mentionnés ci-dessus.

A cet effet, l'invention propose ainsi un procédé d'amortissement des vibrations d'au moins une paire de haubans d'un ouvrage de construction, dans lequel on relie les haubans de ladite paire par un amortisseur présentant une première raideur en réponse à un effort de traction et une deuxième raideur en réponse à un effort de compression, la première raideur étant supérieure à la deuxième raideur.

Dans le contexte de la présente invention, la "raideur" d'un amortisseur s'entend de la relation entre l'effort développé par cet amortisseur et la vitesse de déplacement (relatif) d'un élément actif de cet amortisseur. La raideur de l'amortisseur peut par exemple être vue comme un coefficient de proportionnalité entre ces deux notions d'effort et de vitesse. Si l'amortisseur considéré met en oeuvre un élément visqueux, tel qu'un fluide par exemple, la raideur de l'amortisseur s'apparente ainsi à un coefficient de viscosité. Une telle raideur n'est pas à confondre avec la notion connue deproportionnalité entre effort et déplacement (plutôt que vitesse), comme dans le cas d'un ressort par exemple.

L'utilisation d'un amortisseur permet de limiter certains au moins des inconvénients des câbles d'interconnexion mentionnés plus haut. De plus la différence de raideur en traction et en compression de l'amortisseur permet de limiter certains au moins des inconvénients des amortisseurs symétriques mentionnés plus haut.

Selon des modes de réalisation avantageux qui peuvent être combinés dans toutes les façons envisageables :
- l'amortisseur est placé de façon qu'un axe de travail dudit amortisseur soit sensiblement perpendiculaire aux haubans de ladite paire ;
- l'amortisseur est un amortisseur à course sensiblement rectiligne ; cet amortisseur peut ou non utiliser un piston ;
- l'amortisseur fonctionne par circulation d'un fluide visqueux entre deux chambres séparées par un piston, la circulation du fluide visqueux se faisant à travers au moins un passage qui crée une différence de pression lors du passage du fluide visqueux entre les deux chambres ;
- la différence de pression créée par le passage du fluide est moindre lorsque l'amortisseur fonctionne en compression par rapport à son fonctionnement en traction ;
- l'amortisseur fonctionne par circulation d'un fluide visqueux entre deux chambres séparées par un piston, la circulation du fluide visqueux se faisant, en réponse à un effort de traction sur l'amortisseur, à travers au moins un premier passage ménagé dans le piston et recouvert en sortie par au moins un premier clapet, et, en réponse à un effort de compression sur l'amortisseur, à travers au moins un deuxième passage ménagé dans le piston et recouvert en sortie par au moins un deuxième clapet ;
- l'amortisseur présente au moins l'une des deux caractéristiques suivantes : ledit premier clapet a une souplesse inférieure audit deuxième clapet, et ledit premier passage présente une section transversale inférieure audit deuxième passage ;
- la première raideur est supérieure à la deuxième raideur dans un rapport de 1 à 1,2 au moins ;
- la deuxième raideur est quasi nulle ;
- l'un des haubans de ladite paire de haubans est en outre relié à un élément fixe de l'ouvrage de construction par l'intermédiaire d'un amortisseur présentant une première raideur en réponse à un effort de traction et une deuxième raideur en réponse à un effort de compression, la première raideur étant supérieure à la deuxième raideur ;
- la liaison entre l'amortisseur et l'un au moins des haubans de ladite paire permet la rotation autour de l'axe dudit hauban;
- l'ouvrage de construction comprend au moins une nappe de haubans situés sensiblement dans un même plan et incluant ladite paire de haubans ;
- l'amortisseur est placé de façon qu'un axe de travail dudit amortisseur soit sensiblement dans ledit plan de la nappe de haubans ;
- la nappe de haubans est constituée d'au moins trois haubans, et des amortisseurs relient au moins certaines paires s de haubans adjacents de la nappe de haubans, au moins un desdits amortisseurs présentant une première raideur en réponse à un effort de traction et une deuxième raideur en réponse à un effort de compression, la première raideur étant supérieure à la deuxième raideur ;
- les amortisseurs reliant des paires successives de haubans adjacents de la nappe de haubans ne sont pas dans le prolongement l'un de l'autre ; et/ou
- l'ouvrage de construction comprend un pont haubané.

L'invention propose aussi un système comprenant un ouvrage de construction et un amortisseur agencé pour amortir des vibrations d'au moins une paire de haubans de l'ouvrage de construction selon le procédé susmentionné, ledit amortisseur étant relié aux haubans de ladite paire et présentant une première raideur en réponse à un effort de traction et une deuxième raideur en réponse à un effort de compression, la première raideur étant supérieure à la deuxième raideur.

D'autres particularités et avantages de la présente invention apparaîtront dans la description ci-après d'exemples de réalisation non limitatifs, en référence aux dessins annexés, dans lesquels :
- la figure 1 est un schéma montrant un exemple d'ouvrage de construction comprenant des haubans dont des vibrations sont amorties selon un mode de réalisation de l'invention ;
- la figure 2 est un schéma montrant un détail de l'amortissement pour une sous-partie de l'ouvrage de construction de la figure 1 ;
- la figure 3 est un schéma montrant un exemple non limitatif d'amortisseur asymétrique pouvant être utilisé dans le cadre de l'invention ;
- la figure 4 est un graphe montrant un exemple non limitatif de loi de comportement effort/vitesse d'un amortisseur asymétrique pouvant être utilisé dans le cadre de l'invention ;
- les figures 5 à 13 prévoient des exemples non limitatifs d'amortissement d'une nappe de haubans faisant intervenir une pluralité d'amortisseurs asymétriques et éventuellement symétriques.

L'invention vise l'amortissement des vibrations d'au moins une paire de haubans d'un ouvrage de construction. On considère ci-après le cas où l'on amortit des vibrations d'au moins deux haubans d'un pont haubané. Cet exemple n'est cependant donné qu'à titre illustratif et ne limite en rien la portée générale de l'invention. A titre d'exemple alternatif d'ouvrage de construction incluant au moins deux haubans, auquel la présente invention peut être appliquée, on peut citer un bâtiment, un chapiteau, ou autre.

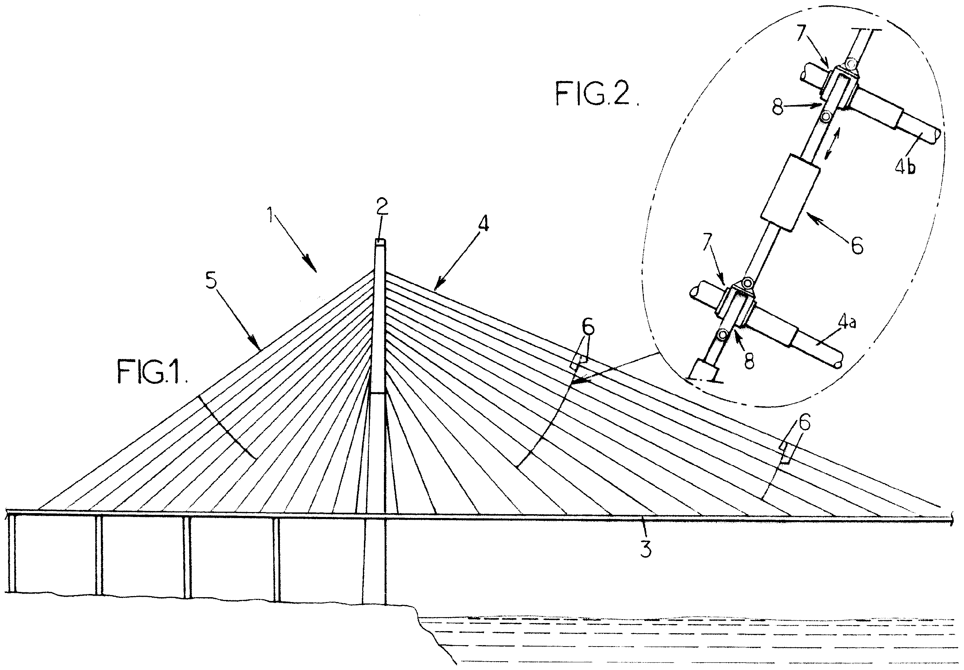

La figure 1 montre un pont haubané 1 qui comprend au moins un pylône 2, un tablier 3 et, dans l'exemple considéré ici, deux nappes de haubans 4 et 5 qui relient le tablier 3 au pylône 2.

Les nappes de haubans 4 et 5 sont employées pour soutenir la partie du tablier 3 qui ne repose pas sur des pylônes de soutien (partie du tablier se trouvant à la droite du pylône 2 dans l'exemple considéré ici).

La nappe de haubans 4 est formée par un ensemble de haubans, situés sensiblement dans un même plan, qui sont inclinés vers le bas et vers la droite, chaque hauban présentant une extrémité supérieure ancrée dans une zone d'ancrage respective aménagée sur le pylône 2 et une extrémité inférieure ancrée sur le tablier 3. De même la nappe de haubans 5 comprend, sensiblement dans un même plan, un ensemble de haubans inclinés vers le bas et vers la gauche, chaque hauban de cette nappe de haubans 5 présentant une extrémité supérieure directement ancrée dans une zone d'ancrage respective aménagée sur le pylône 2, et une extrémité inférieure ancrée sur le tablier 3.

De manière connue en soi, chaque hauban peut être formé d'un faisceau de brins métalliques qui sont ancrés à leurs deux extrémités, et d'une gaine en plastique qui entoure et protège le faisceau de brins métalliques de l'extérieur et notamment de la corrosion. Cette gaine 42 peut par exemple être réalisée à partir de polyéthylène à haute densité (PEHD).

La figure 2 représente une vue détaillée d'une portion de la nappe de haubans 4, et plus particulièrement d'un premier hauban 4a et d'un deuxième hauban 4b qui sont reliés entre eux par un amortisseur 6.

Conformément à la présente invention, l'amortisseur 6 est tel qu'il présente une première raideur en réponse à un effort de traction et une deuxième raideur en réponse à un effort de compression, la première raideur étant supérieure à la deuxième raideur.

Autrement dit, contrairement aux amortisseurs habituellement utilisés dans des ouvrages de construction à haubans, l'amortisseur 6 a un fonctionnement différent selon qu'il fonctionne en traction ou en compression. En première approche, un tel amortisseur asymétrique paraît moins efficace qu'un amortisseur symétrique. Si la raideur en compression est nulle, l'efficacité est approximativement divisée par deux puisque seule la moitié du cycle d'oscillation est utilisée pour dissiper de l'énergie vibratoire. Cette perte d'efficacité dissuade l'homme du métier d'utiliser un amortisseur asymétrique pour amortir des vibrations d'au moins un hauban d'un ouvrage de construction. Mais des avantages résultent d'une telle utilisation comme cela va être exposé par la suite.

En outre, on peut noter qu'avec un réglage ad hoc finement calculé, il est possible de dépasser le seuil de la moitié de l'amortissement moyen avec un réglage légèrement plus "raide" de la relation effort/vitesse que celui du calcul linéaire optimal. De ce fait, la perte d'efficacité résultant de l'utilisation d'un amortisseur asymétrique peut être réduite.

Un amortisseur asymétrique est tel que le rapport entre l'effort développé sur celui-ci et la vitesse de déplacement d'un de ses éléments mobiles n'est pas identique selon qu'il fonctionne en traction ou en compression.

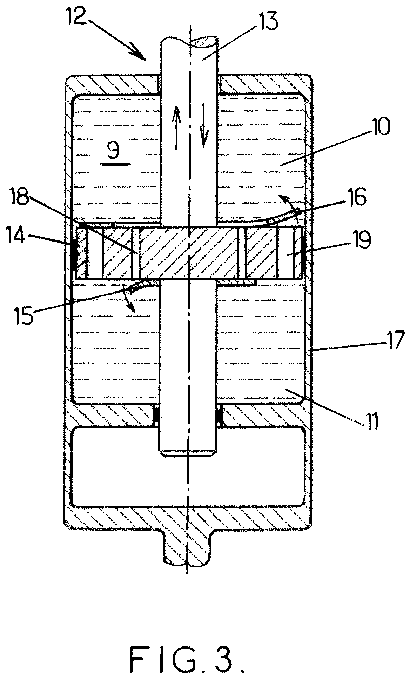

Un exemple non limitatif d'un tel amortisseur asymétrique apparaît à la figure 3. Il s'agit d'un amortisseur à piston à course sensiblement rectiligne.

Le piston 12 comprend une tige 13 et une partie transversale 14. Il se déplace, dans l'axe de la tige 13, à l'intérieur d'un corps de piston 17. Sa partie transversale 14 délimite deux chambres de piston 10 et 11, remplies d'un fluide visqueux, comme de l'huile par exemple.

Le comportement en traction de cet amortisseur (c'est-à-dire lorsque la tige 13 sort du corps 17) est illustré schématiquement sur la partie gauche de la figure 3, tandis que son comportement en compression (c'est-à-dire lorsque la tige 13 rentre dans le corps 17) est illustré schématiquement sur la partie droite de la figure 3.

En ce qui concerne le comportement en traction de l'amortisseur, au moins un passage 18 (deux passages sur la figure 3) est ménagé dans la partie transversale 14 du piston 12. Un clapet (ou "clinquant") correspondant 15 recouvre la sortie du passage 18, située sous la partie transversale 14 du piston 12 dans l'exemple de la figure 3. Ce clapet 15 se déforme lors du retrait de la tige 13 du corps 17, de façon à laisser passer une certaine quantité de fluide 9 de la chambre 10 à la chambre 11.

Un comportement similaire existe en compression de l'amortisseur. Au moins un passage 19 (deux passages sur la figure 3) est ménagé dans la partie transversale 14 du piston 12. Un clapet (ou "clinquant") correspondant 16 recouvre la sortie du passage 19, située sur la partie transversale 14 du piston 12 dans l'exemple de la figure 3. Ce clapet 16 se déforme lors de la rentrée de la tige 13 dans le corps 17, de façon à laisser passer une certaine quantité de fluide 9 de la chambre 11 à la chambre 10.

Pour assurer une raideur de l'amortisseur plus élevée en traction qu'en compression, plusieurs possibilités sont envisageables.

On peut par exemple utiliser un clapet 15 avec une souplesse inférieure au clapet 16. Cette différence de souplesse peut être obtenue en prévoyant une épaisseur pour le clapet 15 supérieure à celle du clapet 16. En variante ou en complément, un matériau plus rigide peut être utilisé pour le clapet 15 que pour le clapet 16. Ces différentes possibilités visent à assurer une résistance au passage du fluide 9 d'une chambre à l'autre, plus importante pour le clapet 15 que pour le clapet 16.

En variante ou en complément, le passage 18 utilisé en traction présente une section transversale inférieure au passage 19 utilisé en compression. De cette façon, le passage du fluide 9 de la chambre 10 à la chambre 11 se fait plus difficilement (c'est à dire avec un effort résistant plus élevé) en traction que le passage du fluide 9 de la chambre 11 à la chambre 10 en compression à déplacement équivalent du piston 12 par rapport au corps 17..

D'autres mesures sont également envisageables pour assurer la différence de raideur de l'amortisseur en traction et en compression, en remplacement ou en complément de celles qui viennent d'être décrites, comme cela apparaîtra à l'homme du métier.

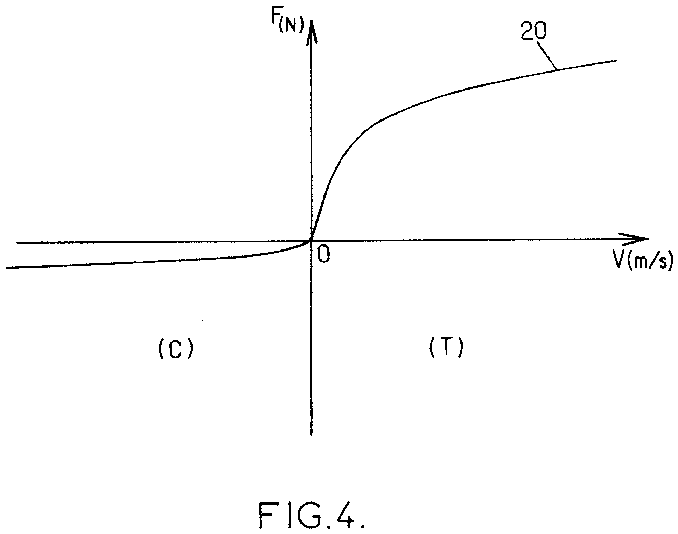

Un amortisseur asymétrique, tel qu'il vient d'être décrit, a un comportement mécanique tel qu'illustré sur la courbe 20 de la figure 4. Cette courbe représente les variations de la force F exercée sur le piston 12 (force de rappel) en fonction de la vitesse v de déplacement de ce piston 12 par rapport au corps 17. Par convention, la partie gauche du graphe, où la vitesse v est négative, correspond à la compression (C) de l'amortisseur, tandis que la partie droite du graphe, où la vitesse v est positive, correspond à la traction (T) de l'amortisseur.

Dans l'exemple illustré sur la figure 4, le comportement de l'amortisseur asymétrique utilisé peut être modélisé comme suit. En compression, l'amortisseur suit une loi du type : Fc = λc x v ^{αc}, où Fc désigne l'effort de compression développé par l'amortisseur, v désigne la vitesse de déplacement d'un élément mobile de l'amortisseur (piston ou autre), λc désigne un coefficient, et αc désigne un nombre entier ou réel, par exemple (mais pas nécessairement) inférieur à 1. En traction, l'amortisseur suit une loi du type : Ft = λt x v ^{αt}, où Ft désigne l'effort de traction développé par l'amortisseur, v désigne la vitesse de déplacement d'un élément actif de l'amortisseur (piston ou autre), λt désigne un coefficient, et αt désigne un nombre entier ou réel, par exemple (mais pas nécessairement) inférieur à 1.

De plus, les coefficients λc et λt d'une part et les exposants αc et αt d'autre part ne sont pas identiques. Ils sont tels que la force Fc de compression soit d'une valeur inférieure à la force Ft de traction (pour une valeur de v donnée). Fc est avantageusement faible pour ne pas créer trop d'instabilité.

Bien qu'un exemple d'amortisseur asymétrique ait été plus particulièrement décrit en référence à la figure 3, d'autres types d'amortisseurs asymétriques pourraient être utilisés dans le cadre de la présente invention, à condition d'avoir une raideur plus élevée en réponse à un effort de traction qu'en réponse à un effort de compression. De tels amortisseurs asymétriques ne sont pas nécessairement à piston et/ou à déformation sensiblement rectiligne.

On peut par exemple penser à un amortisseur asymétrique sans piston, travaillant en cisaillement par déformation d'un matériau viscoélastique.

De même, alors que l'amortisseur asymétrique de la figure 3 est un amortisseur de type passif, un amortisseur asymétrique à contrôle actif pourrait être utilisé en variante. Un tel amortisseur asymétrique comprend par exemple un piston muni d'un capteur de vitesse à l'aide duquel un système asservi adapte le coefficient visqueux du piston.

D'autres amortisseurs asymétriques encore, plus ou moins sophistiqués, peuvent être envisagés, comme cela apparaîtra à l'homme du métier.

Avantageusement, la différence de raideur de l'amortisseur asymétrique en traction et en compression devrait être importante. A titre d'exemple, la raideur en traction est supérieure à la raideur en compression dans un rapport de 1 à 1,2 au moins. Appliqué à l'exemple de la figure 4, cela pourrait se traduire par un coefficient au moins 1,2 fois supérieur en traction (λt) qu'en compression (λc). En variante, le rapport entre la raideur en traction et la raideur en compression pourrait être de 1 à 2 au moins, ou bien de 1 à 3 au moins, ou bien de 1 à 5 au moins, ou encore de 1 à 10 au moins. Un rapport de 1 à 100 au moins, voire plus, est également envisageable.

Dans un mode de réalisation avantageux, la raideur en compression de l'amortisseur asymétrique est nulle ou quasi nulle (c'est-à-dire la plus proche possible de zéro). Dans ce cas, l'amortisseur n'opposerait de résistance pratiquement que lorsqu'il est en traction. Dans le cadre de l'invention, il n'est cependant pas nécessaire que l'amortisseur asymétrique utilisé soit totalement souple en compression. Une efficacité en compression est possible et peut par exemple se calculer en fonction de la raideur en rotation du ou des haubans concernés et d'un calcul de stabilité en trois dimensions (3D).

Dans l'exemple illustré sur la figure 2, l'amortisseur 6 comprend une première liaison 7 articulée sur le premier hauban 4a et une deuxième liaison 8 articulée sur le deuxième hauban 4b directement adjacent au premier hauban 4a. Ces liaisons 7 et 8 peuvent être de tout type envisageable. L'une ou l'autre de ces liaisons, voire les deux, peut avantageusement être une liaison glissante, c'est-à-dire sans ou avec peu de frottement. En d'autres termes, la liaison 7 et/ou la liaison 8 permet la rotation autour de l'axe du hauban 4a et/ou 4b correspondant.

De plus, l'amortisseur 6 est placé de façon que son axe de travail (l'axe de la tige du piston dans ce cas) soit sensiblement perpendiculaire aux haubans 4a et 4b, auquel il est relié. Son axe de travail, dans l'exemple considéré, est en outre sensiblement dans le plan de la nappe de haubans 4. L'efficacité de l'amortisseur 6 est en effet maximale dans cette configuration, vis-à-vis des vibrations des haubans apparaissant dans le plan de la nappe de haubans 4. D'autres configurations sont cependant envisageables.

Par ailleurs, dans l'exemple des figures 1 et 2, un amortisseur asymétrique 6 est disposé entre chaque paire de haubans adjacents de la nappe de haubans 4. Les amortisseurs asymétriques 6 reliant des paires successives de haubans adjacents de la nappe de haubans sont dans la continuité l'un de l'autre.

L'amortissement des vibrations des haubans du pont haubané tel qu'illustré sur la figure 1 mettant en oeuvre des amortisseurs asymétriques, il permet de résoudre le problème des mouvements de haubans hors du plan de la nappe, mentionné en introduction.

Tous les liens entre les haubans ne sont quasiment qu'en traction ou sont essentiellement en traction, si bien que les efforts des amortisseurs tendent toujours à ramener les haubans dans la nappe à laquelle ils appartiennent. Par conséquent, les haubans ne peuvent plus sortir que modérément du plan de la nappe.

Cela apporte notamment les avantages suivants :
- il n'y a plus d'instabilité hors du plan de la nappe et de risque d'apparition d'angle au niveau des interconnexions aux haubans qui amènerait une perte majeure d'amortissement ;
- l'usage d'amortisseurs asymétriques permet d'atteindre ce résultat à moindre coût, sans avoir à déployer des moyens plus sophistiqués et donc coûteux ;
- l'usage d'amortisseurs asymétriques permet de conserver des dimensions réduites pour les différentes pièces ;
- la suppression de l'instabilité hors du plan de la nappe permet l'usage de liaisons glissantes (autorisant une rotation libre autour des haubans correspondants) au niveau des interconnexions aux haubans et/ou l'absence de continuité entre les amortisseurs, comme mentionné plus haut ;
- les amortisseurs asymétriques reliant les haubans travaillant essentiellement en traction, leur dimensionnement n'a pas à prendre en compte, ou du moins dans une mesure réduite, la compression et le flambement ;
- les amortisseurs asymétriques ramenant systématiquement les haubans dans le plan de la nappe, ils amortissent les vibrations des haubans hors de ce plan.

Un grand nombre de variantes de l'exemple qui vient d'être décrit peuvent être mises en oeuvre dans le cadre de la présente invention. Ces variantes permettent également d'obtenir tout ou partie des avantages listés ci-dessus.

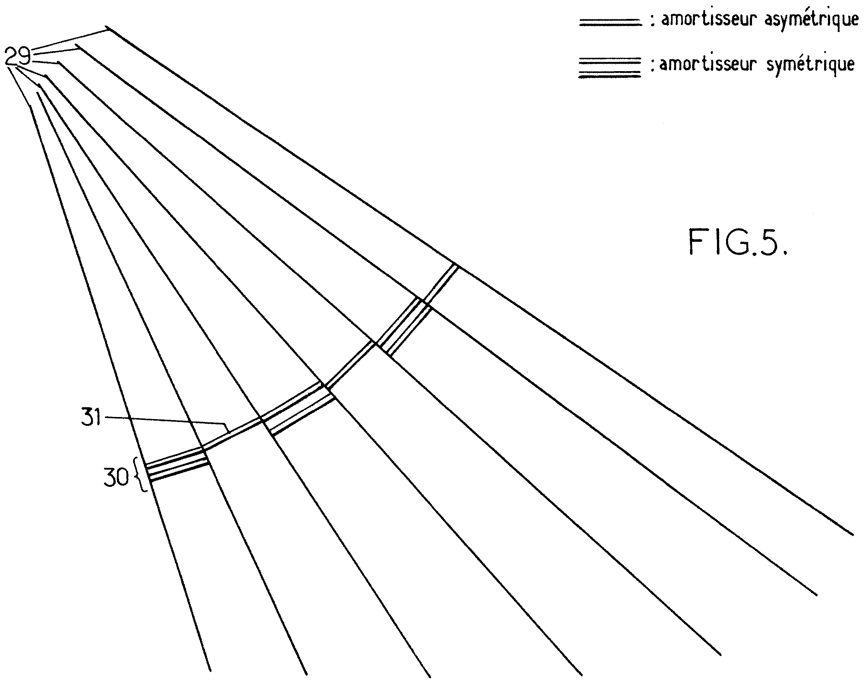

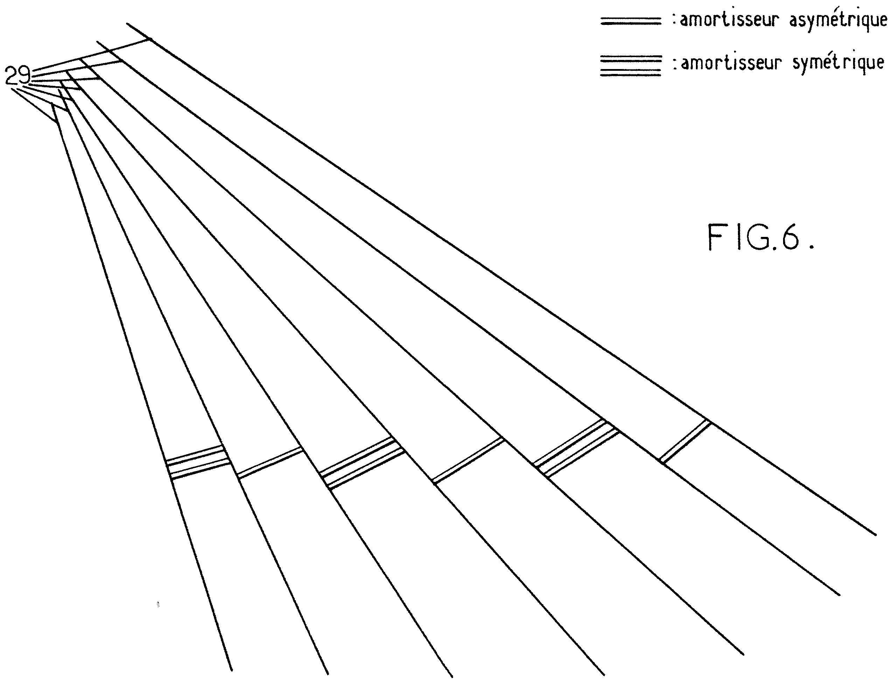

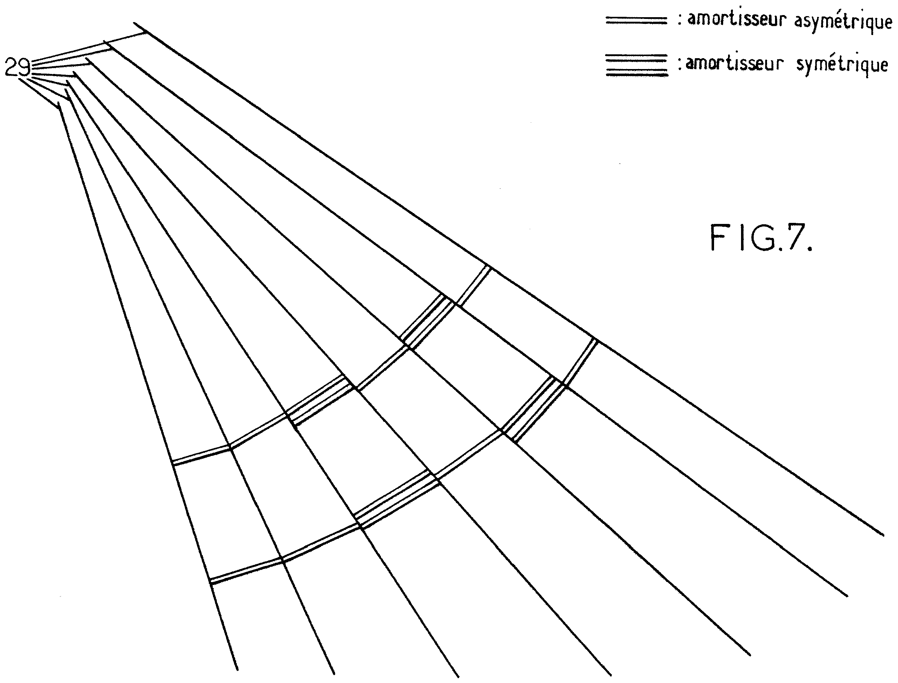

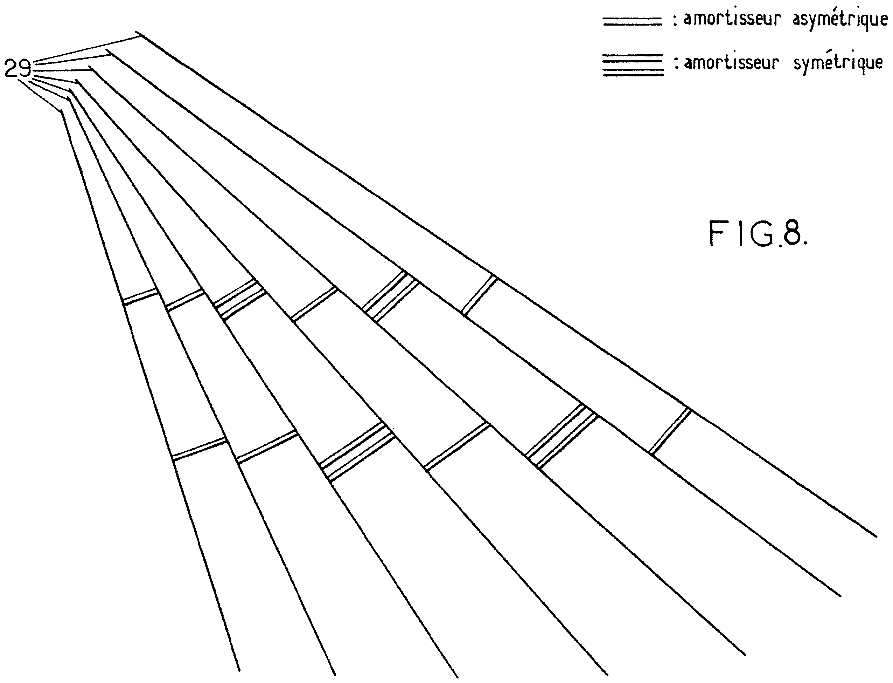

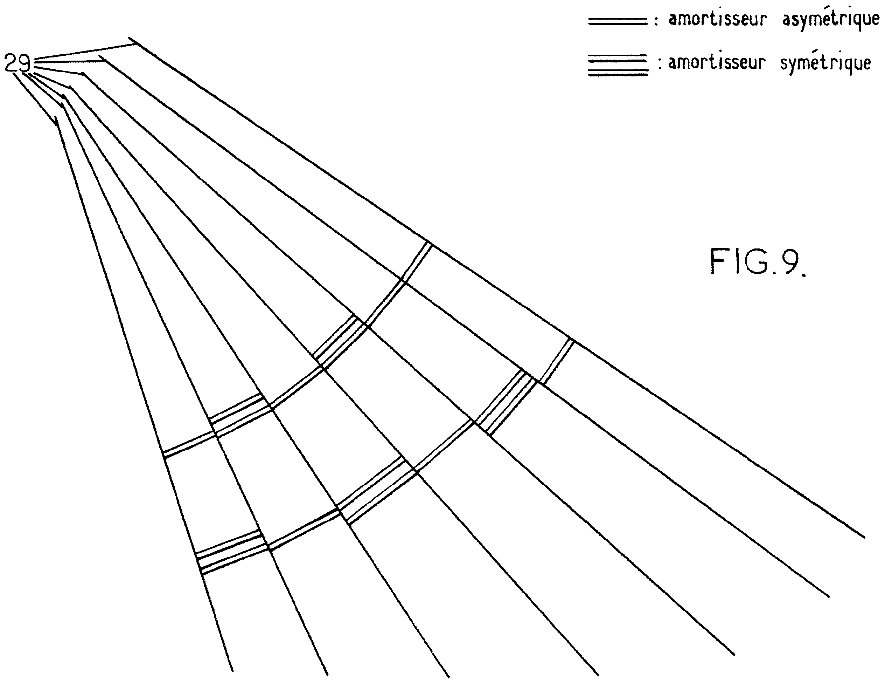

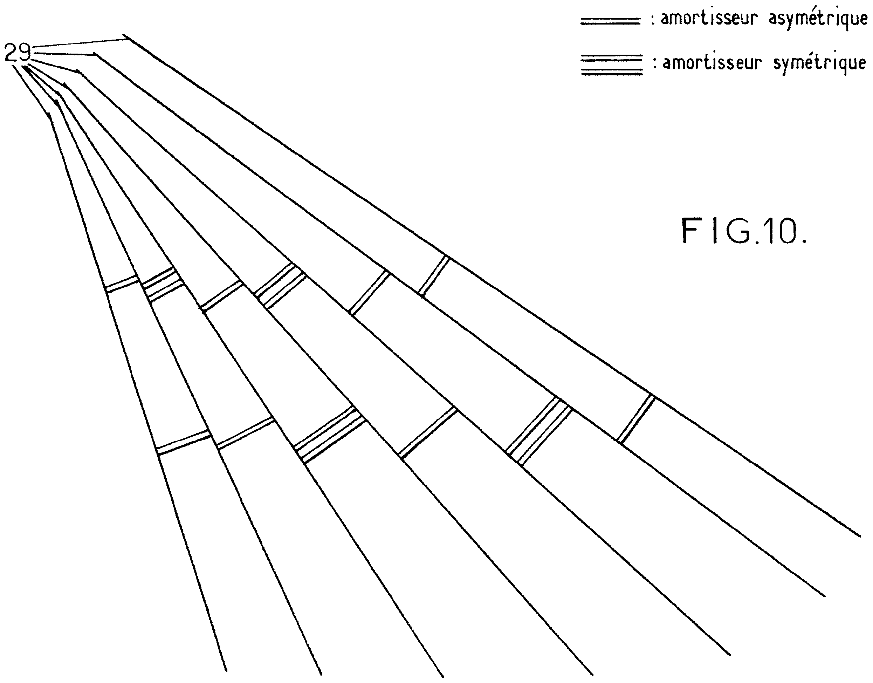

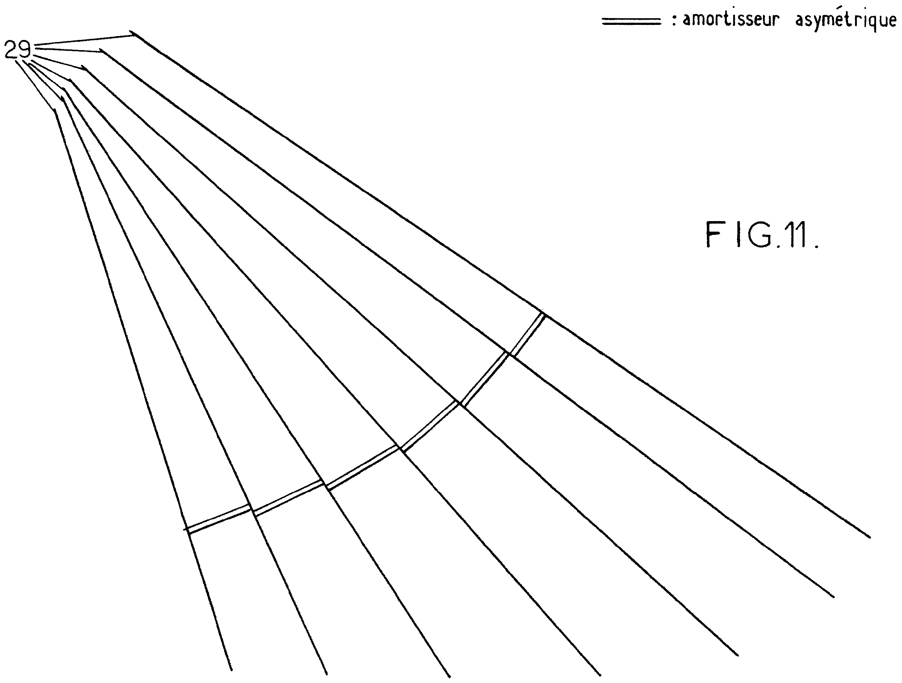

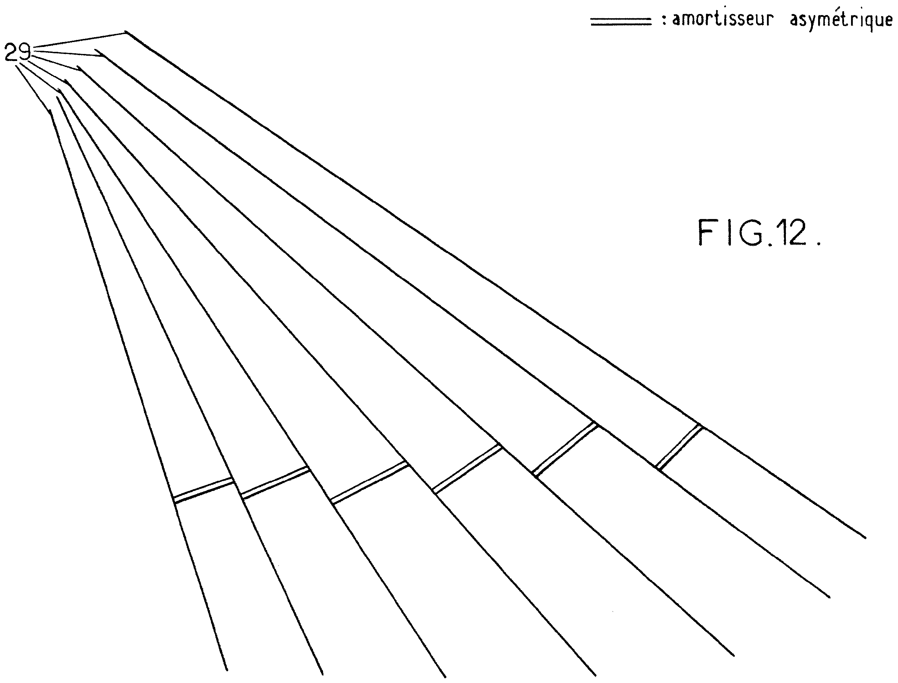

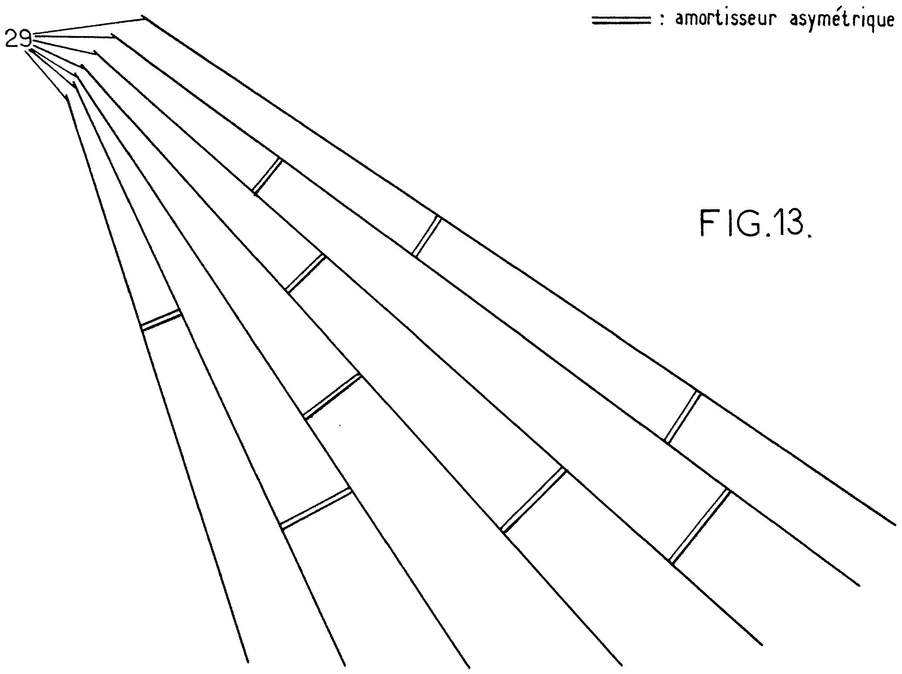

Les figures 5 à 13 illustrent certaines de ces variantes. Sur ces figures, les références 29 correspondent à des haubans d'un ouvrage de construction, tel qu'un pont haubané ou autre. Les liens simples apparaissant entre certains de ces haubans (comme la référence 31 par exemple) représentent des amortisseurs asymétriques, avec une raideur en traction supérieure à leur raideur en compression, tandis que les liens doubles apparaissant entre certains des haubans (comme la référence 30 par exemple) représentent des amortisseurs symétriques.

Comme on peut le voir sur ces figures, les paires successives de haubans adjacents de la nappe de haubans ne sont pas nécessairement toutes reliées par des amortisseurs asymétriques. Un amortisseur symétrique peut faire suite à un amortisseur asymétrique ou à une série de plusieurs amortisseurs asymétriques, ou encore être intercalé entre deux amortisseurs asymétriques. Une alternance d'amortisseurs symétriques et asymétriques est par exemple envisageable. Une absence d'amortisseur entre deux haubans adjacents de la nappe de haubans est également possible.

L'amortisseur reliant la dernière paire (ou les deux dernières paires) de haubans de la nappe est (sont) avantageusement asymétrique(s), pour éviter une sortie de l'avant-dernier hauban du plan de la nappe.

Plusieurs amortisseurs peuvent en outre relier deux mêmes haubans, notamment lorsque ceux-ci sont de longueur importante. Dans ce cas, les amortisseurs reliant deux mêmes haubans peuvent ne pas être de même nature, les uns étant symétriques et les autres étant asymétriques.

Les amortisseurs reliant des paires successives de haubans adjacents peuvent être dans le prolongement les uns des autres, ou non. Un décalage fixe entre les amortisseurs peut être utilisé à cet effet, par exemple de façon que l'écartement entre les amortisseurs reliant deux paires successives de haubans adjacents soit toujours le même. En variante, une répartition moins régulière, voire aléatoire des amortisseurs est envisageable.

Avantageusement, le positionnement des amortisseurs peut être choisi pour casser toute combinaison de fréquences pouvant résulter du comportement vibratoire des haubans de la nappe, de façon à renforcer l'efficacité de l'amortissement. On peut aussi opter pour une répartition des amortisseurs apte à éviter les noeuds des modes propres et donc à éviter les fractions.

Dans les exemples qui ont été commentés ci-dessus, plusieurs amortisseurs asymétriques sont utilisés, chacun en liaison avec deux haubans. On comprendra cependant que l'invention pourrait également être mise en oeuvre en relation avec un ouvrage de construction comprenant une seule paire de haubans. De même, chaque amortisseur asymétrique utilisé pourrait être relié à plus de deux haubans.

L'un au moins des deux haubans d'une paire peut en outre éventuellement être relié à un élément fixe de l'ouvrage de construction auquel il appartient à l'aide d'un amortisseur asymétrique du même type que celui qui relie les deux haubans de la paire. Dans le cas d'un pont haubané par exemple, cela pourrait revenir à relier un au moins des deux haubans au pylône et/ou au tablier du pont avec un amortisseur asymétrique.

D'autres configurations et applications peuvent être envisagées dans le cadre de la présente invention, définie par les revendications ci-jointes, comme cela apparaîtra à l'homme du métier.

## Revendications

1. Procédé d'amortissement des vibrations d'au moins une paire de haubans adjacents (4a,4b) d'un ouvrage de construction (1), dans lequel on relie les haubans adjacents de ladite paire par un amortisseur (6), **caractérisé en ce que** ledit amortisseur (6) présente une première raideur en réponse à un effort de traction et une deuxième raideur en réponse à un effort de compression, la première raideur étant supérieure à la deuxième raideur.

2. Procédé selon la revendication 1, dans lequel l'amortisseur (6) est placé de façon qu'un axe de travail dudit amortisseur soit sensiblement perpendiculaire aux haubans (4a,4b) de ladite paire.

3. Procédé selon la revendication 1 ou 2, dans lequel l'amortisseur (6) amortit les mouvements dans un plan sensiblement perpendiculaire aux haubans (4a,4b) de ladite paire.

4. Procédé selon l'une quelconque des revendications précédentes, dans lequel l'amortisseur (6) est un amortisseur à course rectiligne.

5. Procédé selon l'une quelconque des revendications précédentes, dans lequel l'amortisseur fonctionne par circulation d'un fluide (9) visqueux entre deux chambres (10,11) séparées par un piston, la circulation du fluide visqueux se faisant à travers au moins un passage qui crée une différence de pression lors du passage du fluide visqueux entre les deux chambres.

6. Procédé selon la revendication 5, dans lequel la différence de pression créée par le passage du fluide est moindre lorsque l'amortisseur fonctionne en compression par rapport à son fonctionnement en traction.

7. Procédé selon l'une quelconque des revendications précédentes, 25 dans lequel la première raideur est supérieure à la deuxième raideur dans un rapport de 1 à 1,2 au moins.

8. Procédé selon l'une quelconque des revendications précédentes, dans lequel la deuxième raideur est quasi nulle.

9. Procédé selon l'une quelconque des revendications précédentes, dans lequel l'un au moins des haubans de ladite paire de haubans est en outre relié à un élément fixe de l'ouvrage de construction par l'intermédiaire d'un amortisseur présentant une première raideur en réponse à un effort de traction et une deuxième raideur en réponse à un effort de compression, la première raideur étant supérieure à la deuxième raideur.

10. Procédé selon l'une quelconque des revendications précédentes, dans lequel la liaison entre l'amortisseur et l'un au moins des haubans de ladite paire permet la rotation autour de l'axe dudit hauban.

11. Procédé selon l'une quelconque des revendications précédentes, dans lequel l'ouvrage de construction (1) comprend au moins une nappe (4,5) de haubans situés sensiblement dans un même plan et incluant ladite paire de haubans, et dans lequel l'amortisseur (6) est placé de façon qu'un axe de travail dudit amortisseur soit sensiblement dans ledit plan de la nappe de haubans.

12. Procédé selon la revendication 11, dans lequel la nappe de haubans (4,5) est constituée d'au moins trois haubans, et dans lequel des amortisseurs (6) relient au moins certaines paires de haubans adjacents de la nappe de haubans, au moins un desdits amortisseurs présentant une première raideur en réponse à un effort de traction et une deuxième raideur en réponse à un effort de compression, la première raideur étant supérieure à la deuxième raideur.

13. Procédé selon la revendication 12, dans lequel les amortisseurs reliant des paires successives de haubans adjacents de la nappe de haubans ne sont pas dans le prolongement l'un de l'autre.

14. Procédé selon l'une quelconque des revendications précédentes, dans lequel l'ouvrage de construction (1) comprend un pont haubané.

15. Système comprenant un ouvrage de construction (1) et un amortisseur (6) agencé pour amortir des vibrations d'au moins une paire de haubans adjacents (4a,4b) de l'ouvrage de construction selon l'une quelconque des revendications précédentes, ledit amortisseur étant relié aux haubans adjacents de ladite paire, (6), **caractérisé en ce que** ledit amortisseur (6) présente une première raideur en réponse à un effort de traction et une deuxième raideur en réponse à un effort de compression, la première raideur étant supérieure à la deuxième raideur.

## Patentansprüche

1. Verfahren zur Dämpfung von Schwingungen mindestens eines Paars benachbarter Schrägseile (4a, 4b) eines Bauwerks (1), in welchem man die benachbarten Schrägseile des Paars über einen Dämpfer (6) miteinander verbindet, **dadurch gekennzeichnet, dass** der Dämpfer (6) aufweist:
eine erste Steifheit als Antwort auf eine Zugbelastung und eine zweite Steifheit als Antwort auf eine Druckbelastung, wobei die erste Steifheit größer als die zweite Steifheit ist.

2. Verfahren nach Anspruch 1, in welchem der Dämpfer (6) derart angeordnet ist, dass eine Arbeitsachse des Dämpfers im Wesentlichen senkrecht zu den Schrägseilen (4a, 4b) des Paars ist.

3. Verfahren nach Anspruch 1 oder 2, wobei der Dämpfer (6) die Bewegungen in einer zu den Schrägseilen (4a, 4b) des Paars im Wesentlichen senkrechten Ebene dämpft.

4. Verfahren nach einem der vorstehenden Ansprüche, wobei der Dämpfer (6) ein Dämpfer mit geradlinigem Hub ist.

5. Verfahren nach einem der vorstehenden Ansprüche, wobei die Arbeitsweise des Dämpfers (6) auf einer Zirkulation eines viskosen Fluids (9) zwischen zwei durch einen Kolben getrennten Kammern (10, 11) basiert, wobei die Zirkulation des viskosen Fluids über mindestens einen Kanal erfolgt, der beim Fließen des viskosen Fluids zwischen den zwei Kammern eine Druckdifferenz erzeugt.

6. Verfahren nach Anspruch 5, wobei die durch das Fließen des Fluids erzeugte Druckdifferenz geringer ist, wenn der Dämpfer auf Druck arbeitet, verglichen mit seiner Arbeitsweise auf Zug.

7. Verfahren nach einem der vorstehenden Ansprüche, 25 wobei die erste Steifheit in einem Verhältnis von mindestens 1 bis 1,2 größer als die zweite Steifheit ist.

8. Verfahren nach einem der vorstehenden Ansprüche, in welchem die zweite Steifheit fast Null ist.

9. Verfahren nach einem der vorstehenden Ansprüche, wobei mindestens eines der Schrägseile des Paars Schrägseile außerdem mit einem standfesten Element des Bauwerks verbunden ist, und zwar über einen Dämpfer, der eine erste Steifheit als Antwort auf eine Zugbelastung und eine zweite Steifheit als Antwort auf eine Druckbelastung aufweist, wobei die erste Steifheit größer als die zweite Steifheit ist.

10. Verfahren nach einem der vorstehenden Ansprüche, wobei die Verbindung zwischen dem Dämpfer und dem mindestens einen der Schrägseile des Paars die Rotation um die Achse dieses Schrägseils erlaubt.

11. Verfahren nach einem der vorstehenden Ansprüche, wobei das Bauwerk (1) mindestens eine Gruppe (4, 5) von Schrägseilen, die im Wesentlichen in derselben Ebene angeordnet sind, darin enthalten das Paar Schrägseile, aufweist, und wobei der Dämpfer (6) derart angeordnet ist, dass eine Arbeitsachse des Dämpfers im Wesentlichen in der Ebene der Schrägseilgruppe ist.

12. Verfahren nach Anspruch 11, wobei die Schrägseilgruppe (4, 5) aus mindestens drei Schrägseilen besteht, und wobei der Dämpfer (6) mindestens gewisse Paare benachbarter Schrägseile der Schrägseilgruppe verbindet, wobei mindestens einer der Dämpfer eine erste Steifheit als Antwort auf eine Zugbelastung und eine zweite Steifheit als Antwort auf eine Druckbelastung aufweist, wobei die erste Steifheit größer als die zweite Steifheit ist.

13. Verfahren nach Anspruch 12, wobei die Dämpfer, die aufeinanderfolgende Paare benachbarter Schrägseile der Schrägseilgruppe verbinden, nicht in ihrer gegenseitigen Verlängerung angeordnet sind.

14. Verfahren nach einem der vorstehenden Ansprüche, wobei das Bauwerk (1) eine Schrägseilbrücke aufweist.

15. System, das ein Bauwerk (1) und einen Dämpfer (6) zum Dämpfen von Schwingungen mindestens eines Paars benachbarter Schrägseile (4a, 4b) des Bauwerks nach einem der vorstehenden Ansprüche aufweist, wobei der Dämpfer mit benachbarten Schrägseilen des Paars verbunden ist, (6) **dadurch gekennzeichnet, dass** der Dämpfer (6) eine erste Steifheit als Antwort auf eine Zugbelastung und eine zweite Steifheit als Antwort auf eine Druckbelastung aufweist, wobei die erste Steifheit größer als die zweite Steifheit ist.

## Claims

1. Method of damping vibrations of at least one pair of adjacent stay cables (4a, 4b) of a civil engineering structure (1), in which the stay cables of said pair are linked by a damper (6), **characterized in that** said damper (6) has a first stiffness in response to tensile stress and a second stiffness in response to compressive stress, the first stiffness being greater than the second stiffness.

2. Method according to claim 1, in which the damper (6) is placed so that an operating axis of said damper is substantially perpendicular to the stay cables (4a, 4b) of said pair.

3. Method according to claim 1 or 2, in which the damper (6) damps the movements in a plane substantially perpendicular to the stay cables (4a,4b) of said pair.

4. Method according to any one of the previous claims, in which the damper (6) is a damper having a rectilinear stroke.

5. Method according to any one of the previous claims, in which the damper operates by a viscous fluid (9) flowing between two chambers (10, 11) separated by a piston, the viscous fluid flow taking place through at least one passage that creates a pressure difference when the viscous fluid passes between the two chambers.

6. Method according to claim 5, in which the pressure difference created by the passage of the fluid is less when the damper is operating under compression in relation to its operation under tension.

7. Method according to any one of the previous claims, in which the first stiffness is greater than the second stiffness in a ratio of at least 1 to 1.2.

8. Method according to any one of the previous claims, in which the second stiffness is almost zero.

9. Method according to any one of the previous claims, in which at least one of the stay cables of said pair of stay cables is moreover linked to a fixed element of the civil engineering structure by means of a damper having a first stiffness in response to tensile stress and a second stiffness in response to compressive stress, the first stiffness being greater than the second stiffness.

10. Method according to any one of the previous claims, in which the connection between the damper and at least one of the stay cables of said pair allows said stay to rotate about the axis.

11. Method according to any one of the previous claims, in which the civil engineering structure (1) comprises at least one stay cable array (4.5) situated substantially in the same plane and including said pair of stay cables, and in which the damper (6) is positioned so that an operating axis of said damper is substantially within said plane of the stay cable array.

12. Method according to claim 11, in which the stay cable array (4, 5) is constituted of at least three stay cables, and in which dampers (6) link at least certain pairs of adjacent stay cables of the stay cable array, at least one of said dampers having a first stiffness in response to tensile stress and a second stiffness in response to compressive stress, the first stiffness being greater than the second stiffness.

13. Method according to claim 12, in which the dampers linking the successive pairs of adjacent stay cables of the stay cable array do not run on from each other.

14. Method according to any one of the previous claims, in which the civil engineering structure (1) comprises a cable-stayed bridge.

15. System comprising a civil engineering structure (1) and a damper (6) arranged in order to damp vibrations of at least one pair of adjacent stay cables (4a, 4b) of the civil engineering structure according to any one of the previous claims, said damper being connected to the adjacent stay cables of said pair, **characterized in that** said damper (6) has a first stiffness in response to tensile stress and a second stiffness in response to compressive stress, the first stiffness being greater than the second stiffness.
